# EUROPÄISCHE PATENTSCHRIFT

(11) **EP 2 286 100 B1**
(45) Veröffentlichungstag und Bekanntmachung des Hinweises auf die Patenterteilung: **10.06.2015**
(21) Anmeldenummer: 09753730.2
(22) Anmeldetag: 09.04.2009
(51) Int. Cl.: F16C 19/18, F16C 19/38, F16C 33/66, B60B 27/00

(54) **RADLAGERANORDNUNG MIT FETTVERTEILERRING**
WHEEL BEARING ARRANGEMENT WITH GREASE DISTRIBUTOR RING
ARRANGEMENT DE PALIER DE ROUE AVEC BAGUE DE DISTRIBUTION DE GRAISSE

(30) Priorität: 28.05.2008 DE 102008025568
(43) Veröffentlichungstag der Anmeldung: 23.02.2011
(73) Patentinhaber: Schaeffler Technologies AG & Co. KG, 91074 Herzogenaurach (DE)
(72) Erfinder: SCHÄFER, Marc-Andre, 97532 Uechtelhausen (Zell) (DE); WILM, Bernhard, 97720 Nüdlingen (DE)
(86) Internationale Anmeldenummer: PCT/EP2009/054288
(87) Internationale Veröffentlichungsnummer: WO 2009/144075

(56) Entgegenhaltungen:
- JP-A- 2000 192 972
- JP-A- 2008 095 766
- US-A- 2 272 757
- US-A- 3 913 992

## Beschreibung

### Gebiet der Erfindung

Die Erfindung betrifft eine Radlageranordnung mit einem drehenden und einem stationären Drehpartner und mit mindestens zwei Wälzkörperreihen, wobei die Drehpartner um die zwei Wälzkörperreihen zueinander drehbar um eine Drehachse gelagert sind, und mit einem Fettverteilerring, wobei der Fettverteilerring drehfest mit dem drehenden Drehpartner verbunden ist und eine erste Fettführungsfläche aufweist, welche so ausgerichtet ist, dass bei der Rotation des drehenden Drehpartners Schmiermittel an eine der Wälzkörperreihen geleitet wird.

Radlageranordnungen dienen im allgemeinen dazu, angetriebene oder nicht angetriebene Räder eines Fahrzeugs drehbar zu lagern. Nachdem aufgrund von Qualitätsansprüchen von Anwendern gefordert wird, dass Radlageranordnungen über mehrere 100-Tausende oder Millionen Kilometer versagensfrei in dem Fahrzeug arbeiten, ist es notwendig, eine zuverlässige Dauerschmierung für die Radlageranordnung, insbesondere für die Wälzkörper der Wälzkörperreihen vorzusehen.

Hierzu ist es bei zweireihigen Radlageranordnungen bekannt, den Zwischenraum zwischen den Wälzkörperreihen mit Schmierfett zu versehen und auf diese Weise eine Lebensdauerschmierung zu erreichen. Eine derartige Lösung wird beispielsweise in der Druckschrift WO 2004/099637 A 1 vorgeschlagen.

Bei einer anderen Ausführung gemäß der Druckschrift US 2005/0185871 A1, die ebenfalls eine Radlageranordnung beschreibt, wird vorgeschlagen durch Aussparungen, welche in einem äußeren Drehpartner und/oder in einem inneren Drehpartner eingebracht sind, den Bereich zwischen den beiden Wälzkörperreihen zu vergrößern und auf diese Weise mehr Freiraum für zusätzliches Schmierfett bereit zu stellen.

Die Druckschrift US 3,913,992 beschreibt ein verbessertes Schmierverfahren für eine Lageranordnung, bei der eine Nabe auf einem Zapfen über ein zweireihiges Wälzlager gelagert ist. Bei einer Ausführungsform ist jedem der Wälzkörperreihen ein separater Fettverteilerring zugeordnet, welcher drehfest mit der Nabe verbunden ist und mit dieser rotiert. Jeder Fettverteilerring weist im Längsschnitt durch die Drehachse auf der der Wälzkörperreihe zugewandten Seite einen derart gekrümmten Verlauf auf, so dass Schmierfett, welches im Bereich der Krümmung eingebracht ist, im Betrieb durch die Zentrifugalkraft den Fettverteilerring entlang kriecht und zu den Wälzkörpern geleitet wird.

Aus JP 2000192972 A ist ein zweireihiges Kegelrollenlager mit einem Fettspreicherring bekannt, der an der rotierenden Nabe befestigt und zwischen den Wälzkörperreihen angeordnet ist.

In der JP 2008095766 A ist ein einstückiger, umfänglich unterbrochener Verteilungsring offenbart, der radial nach innen konvex ausgeformt ist.

Der Erfindung liegt die Aufgabe zu Grunde, eine Radlageranordnung mit einer zuverlässigen Schmierung vorzuschlagen, welche sich durch einen einfachen Aufbau auszeichnet.

Diese Aufgabe wird durch eine Radlageranordnung mit den Merkmalen des Anspruchs 1 gelöst. Bevorzugte oder vorteilhafte Ausführungsformen der Erfindung ergeben sich aus den Unteransprüchen, der nachfolgenden Beschreibung und den beigefügten Figuren.

Im Rahmen der Erfindung wird eine Radlageranordnung für ein beliebiges Fahrzeug, insbesondere für ein Auto, bevorzugt für einen Lastkraftwagen, vorgeschlagen, welche einen drehenden und einen stationären Drehpartner aufweist. Bevorzugt ist der stationäre Drehpartner als ein Achszapfen oder dergleichen ausgebildet, der drehende Drehpartner bildet einen Träger für eine Nabe oder ist selbst als die Nabe ausgebildet.

Die Radlageranordnung weist mindestens zwei Wälzkörperreihen mit Wälzkörpern auf, wobei die Drehpartner über die zwei Wälzkörperreihen zueinander drehbar um eine gemeinsame Drehachse gelagert sind. Die Wälzkörper sind in der allgemeinsten Ausführung beliebig ausgebildet. Insbesondere bei einem Einsatz bei einem Lastkraftwagen ist es bevorzugt, dass die Wälzkörper als Rollen, insbesondere Zylinderrollen, Kegelrollen oder Tonnen realisiert sind. Die Wälzkörper können auch als Kugeln oder Kugelrollen ausgebildet sein. Vorzugsweise sind die Wälzkörper der zwei Wälzkörperreihen zueinander in einer O-Anordnung arrangiert.

Die Radlageranordnung umfasst im Weiteren einen Fettverteilerring, welcher drehfest mit dem drehenden Partner verbunden ist und mit diesem rotiert. Der Fettverteilerring weist eine erste Fettführungsfläche auf, welche so ausgerichtet ist, dass bei der Rotation des drehenden Drehpartners und somit bei der Rotation des Fettverteilerrings Schmierfett, welches auf dem Fettverteilerring angeordnet bzw. gelangt ist, an eine der Wälzkörperreihen geleitet wird.

Zudem weist der Fettverteilerring eine zweite Fettführungsfläche auf, welche so ausgerichtet ist, dass bei der Rotation des drehenden Drehpartners Schmierfett auch an die andere der Wälzkörperreihen geleitet wird.

Damit wird gemäß der Erfindung vorgeschlagen, den Fettverteilerring als eine zentral zwischen zwei Wälzkörperreihen angeordnete Baueinheit oder - gruppe auszubilden, welche zum einen einfach herstellbar ist und zum anderen in einfacher Weise montiert bzw. demontiert werden kann. Der Vorteil des zentralen Fettverteilerrings ist auch darin zu sehen, dass der Zwischenraum zwischen den beiden Wälzkörperreihen, welcher bereits oftmals für ein Schmierfettdepot genutzt wird, weiterhin verwendet werden kann. Im Gegensatz zu den bekannten Lösungen, bei denen das Schmierfett des Schmierfettdepots aufgrund von Wärmeeinwirkung, insbesondere zu starker Hitze, und/oder Vibrationen gegen die Nabe geschleudert wird und durch die Zentrifugalkraft des drehenden Drehpartners, also der Nabe, dort festgehalten wird, sorgt der Fettverteilerring dafür, dass Schmierfett, welches den stationären Drehpartner verlässt, aufgefangen und zuverlässig zu den Wälzkörperreihen geführt wird. Dadurch ist sichergestellt, dass nahezu das gesamte Schmierfettdepot zur Nachversorgung der Wälzkörperreihen verwendet wird und nicht in einem toten Raum der Radlageranordnung abgelegt wird.

Die Erfindung schlägt vor, dass die beiden Fettführungsflächen in dem Längsschnitt unterschiedliche Krümmungen, unterschiedliche axiale Erstreckungen und/oder unterschiedliche radiale Erstreckungen aufweisen. Durch die genannten Parameter ist es möglich, die Schmierfetttransportgeschwindigkeit und das verfügbare Schmierfettvolumen kontrolliert einzustellen und auf diese Weise die Schmierfettzufuhr zu den Wälzkörperreihen zu steuern.

Bei einer besonders bevorzugten Ausführungsform der Erfindung wird das Schmierfettdepot auf dem stationären Drehpartner angeordnet, wobei ein Weg des Schmierfetts zu den Wälzkörperreihen über das Kriechen des Schmierfetts entlang des stationären Drehpartners erfolgt. Nur der durch Hitzeentwicklung oder Vibration etc. auf den rotierenden Drehpartner bzw. auf den Fettverteilerring übertragene Anteil des Schmierfettes wird über die Fettführungsflächen an die Wälzkörper weitergeführt, so dass ein zweiter Weg gebildet ist. Bevorzugt ist zwischen den beiden Fettführungsflächen ein Mittelabschnitt angeordnet, welcher im Längsschnitt konzentrisch oder konvex bzw. gewölbt zu der Drehachse hin ausgebildet ist. Dieser Mittelabschnitt kann Kontakt mit dem auf dem stationären Drehpartner angeordneten Fettdepot aufnehmen und so das Schmierfett aktiv an den Fettverteilerring übertragen.

Bei einer weiteren bevorzugten Ausführungsform der Erfindung ist der Fettverteilerring aus einem Kunststoffmaterial und/oder als Spritzgussteil ausgebildet. Zum einen führt die Materialwahl dazu, dass die ungefederte, drehende Masse der Radlageranordnung nur geringfügig erhöht wird, zum anderen erlaubt die Ausbildung aus einem Kunststoffmaterial, dass bei einer Demontage der Fettverteilerring in einfacher Weise aus der Radlageranordnung herausgebrochen werden kann. Bevorzugt weist der Fettverteilerring mindestens eine Sollbruchstelle auf, um das Herausbrechen bzw. Demontieren des Fettverteilerrings zu erleichtern.

Bei einer möglichen Ausführungsform der Erfindung ist der Fettverteilerring einteilig bzw. einstückig ausgebildet. Es ist jedoch mehr bevorzugt, wenn der Fettverteilerring mehrteilig ausgebildet ist, da zum einen die Fertigung kostengünstiger ist und zum anderem die Montage bzw. Demontage vereinfacht wird. Besonders bevorzugt ist der Fettverteilerring in Umlaufrichtung und/oder in axialer Richtung ein- oder mehrfach geteilt. Bei einer ersten möglichen Ausführungsform ist der Fettverteilerring beispielsweise in Umlaufrichtung so geteilt, dass dieser zweimal unterbrochen ist, wobei die zwei Hälften des Fettverteilerrings bevorzugt identisch ausgebildet sind und z.B. über Haltenasen und Nuten miteinander verbunden werden. Bei einer anderen möglichen Ausführungsform ist der Fettverteilerring in axialer Richtung einfach unterbrochen, auch hier sind vorzugsweise die beiden Hälften identisch ausgebildet und weisen beispielsweise Nasen auf, welche bei der Montage ineinander greifen.

Bei einer bevorzugten Ausführungsform der Erfindung zeigen die erste und/oder die zweite Fettführungsfläche in einem Längsschnitt durch die Drehachse einen gekrümmten Kurvenverlauf, welcher sich vorzugsweise monoton, insbesondere streng monoton von einem bzw. dem Mittelabschnitt in Richtung der Wälzkörper der Wälzkörperreihen erstreckt. Durch die monoton steigende Ausprägung des Kurvenverlaufs ist sichergestellt, dass sich keine toten Räume für das Schmierfett ergeben.

In einer praxisnahen Ausführung ist sichergestellt, dass der Auslauf der Fettführungsfläche oder -flächen im Bereich der Wälzkörperreihen so angeordnet ist, dass das Schmierfett ungehindert zu den Wälzkörperreihen übertreten kann. Dabei ist es bevorzugt, dass der Auslauf in radial der gleichen Höhe bzw. radial nach innen versetzt zu der radialen Außenseite der Wälzkörperreihe an der dem Fettverteilerring zugewandten Ende angeordnet ist.

Bei einer besonders bevorzugten Ausführungsform der Erfindung ist die Geometrie der Fettführungsfläche auf mindestens einer Seite des Fettverteilerrings in Umlaufrichtung nicht konstant, sondern variierend ausgebildet, wobei sich die Variation auf die oben genannten Parameter erstrecken kann. Durch diese Modifikation ist es möglich, in Umlaufrichtung auf der Seite des Fettverteilerrings mit variierender Geometrie Bereiche mit unterschiedlichen Fettzuführungseigenschaften einzurichten, so dass beispielsweise ein Bereich mit einer geringen Fettzuführungsgeschwindigkeit neben einem Bereich mit einer hohen Fettzuführungsgeschwindigkeit angeordnet ist.

Als eine weitere Möglichkeit zur Steuerung der Schmierfettgeschwindigkeit auf den Fettführungsflächen kann diese Strukturen, insbesondere Längs- und/oder Querrillen und/oder Spiralrillen und/oder Schägrillen aufweisen. Während die Längsrillen in axialer Richtung eher die Schmierfettgeschwindigkeit erhöhen, wird das Fortschreiten des Schmierfettes durch dazu senkrechte Querrillen verringert. Bevorzugt ist auch eine spiralförmige und/oder schneckenförmige und/oder schraubenförmige Anordnung oder Ausprägung der Rillen. Sie hat zur Folge, dass durch die Zentrifugalkraft das Fett in Richtung Lagerstelle gefördert wird, es aber gleichzeitig zu der gewünschten Verzögerung kommt, da das Fett den längeren Weg der Spirale etc. gehen muss. Über die Steigung der Spirale und der Umfangsgeschwindigkeit wird die Fettfördergeschwindigkeit eingestellt. Über die Tiefe der Rillen kann eingestellt werden, wie viel Fett über die Spirale zum Lager geführt wird und wie viel über die Rillen hinweg sich direkt zum Lager bewegt. Neben einer Rillenstruktur können auch andere Strukturen eingebracht werden, die funktionell betrachtet den gleichen oder einen ähnlichen Effekt zeigen.

Bei einer Weiterbildung der Erfindung weist der Fettverteilerring an mindestens einer Seite eine umlaufende Scheibe auf, welche bevorzugt einstückig und/oder einmaterialig in dem Fettverteilerring angeordnet ist, und den durch die Fettführungsfläche aufgespannten Raum in axialer Richtung begrenzt. Die Scheibe weist Fettdurchgangslöcher auf, welche als Fettmengenbegrenzer wirken. Bei dieser Weiterbildung wird das Schmierfett durch die Zentrifugalkraft entlang der Fettführungsfläche bzw. -flächen in Richtung der Wälzkörperreihen transportiert, legt sich dann an der oder den Scheiben an und wird begrenzt durch die Fettdurchgangslöcher an die Wälzkörperreihen abgegeben.

Konstruktiv betrachtet ist es bevorzugt, dass die Radlageranordnung zwei Außenringe mit Laufbahnen aufweist, welche von einander beabstandet angeordnet sind, wobei der Fettverteilerring zwischen den Außenringen kraftschlüssig oder geklemmt gehalten und/oder formschlüssig fixiert ist. Diese Ausbildung weist den Vorteil auf, dass der Innenraum zwischen den Wälzkörperreihen durch das Zusammenfahren der zwei Außenringe und die Anlage an den Fettverteilerring nach radial außen eine statische Dichtheit aufweist. Bevorzugt werden die Außenringe jeweils von axial außen in den im nachfolgenden Betrieb drehenden Drehpartner eingepresst und liegen dort jeweils an einer Schulter des drehenden Drehpartners an. Der Fettverteilerring ist zwischen den inneren Stirnseiten der Außenringe festgeklemmt. Ein Vorteil dieser Anordnung ist es, dass bei einer Demontage der Radlageranordnung zunächst der Fettverteilerring zerstörend, beispielsweise durch Aufbrechen an Sollbruchstellen oder an den Fügestellen bei mehrteiliger Ausführung, ausgebaut werden kann und in einem nächsten Schritt - nachdem die inneren Stirnseiten der Außenringe nun zugänglich sind - die Außenringe ausgepresst werden können. Bei dem Zusammenbau wird in umgekehrter Reihenfolge verfahren, hier wird zuerst der Fettverteilerring eingesetzt und dann von beiden Seiten die Außenringe eingepresst.

Es ist ebenfalls bevorzugt, wenn die Radlageranordnung zwei Innenringe mit Laufbahnen für die Wälzkörperreihen aufweist, wobei die Innenringe unmittelbar an einer Stoßstelle aneinander stoßen und/oder über einen Klammerring miteinander verbunden sind. Bevorzugt ist die Stoßstelle der zwei Innenringe in radialer Richtung mit dem Fettverteilerring überlappend angeordnet.

Weitere Merkmale, Vorteile und Wirkungen der Erfindung ergeben sich aus der nachfolgenden Beschreibung bevorzugter Ausführungsbeispiele sowie der beigefügten Figuren. Dabei zeigen:
- Fig 1: eine schematische Längsschnittdarstellung einer Radlageranordnung gemäß dem Stand der Technik;
- Fig 2: einen Detailausschnitt aus der Figur 1 zur Illustration der Funktionsweise des Fettverteilerrings gemäß dem Stand der Technik;
- Fig 3: eine schematische Längsschnittdarstellung des Fettverteilerrings in einer möglichen Ausführungsform der Figuren 1 und 2 gemäß dem Stand der Technik;
- Fig 4 a - d und Fig 4g: verschiedene Varianten hinsichtlich der Geometrie, des Materials, der Oberflächenstruktur und des konstruktiven Aufbaus des Fettverteilerrings in den vorhergehenden Figuren gemäß dem Stand der Technik;

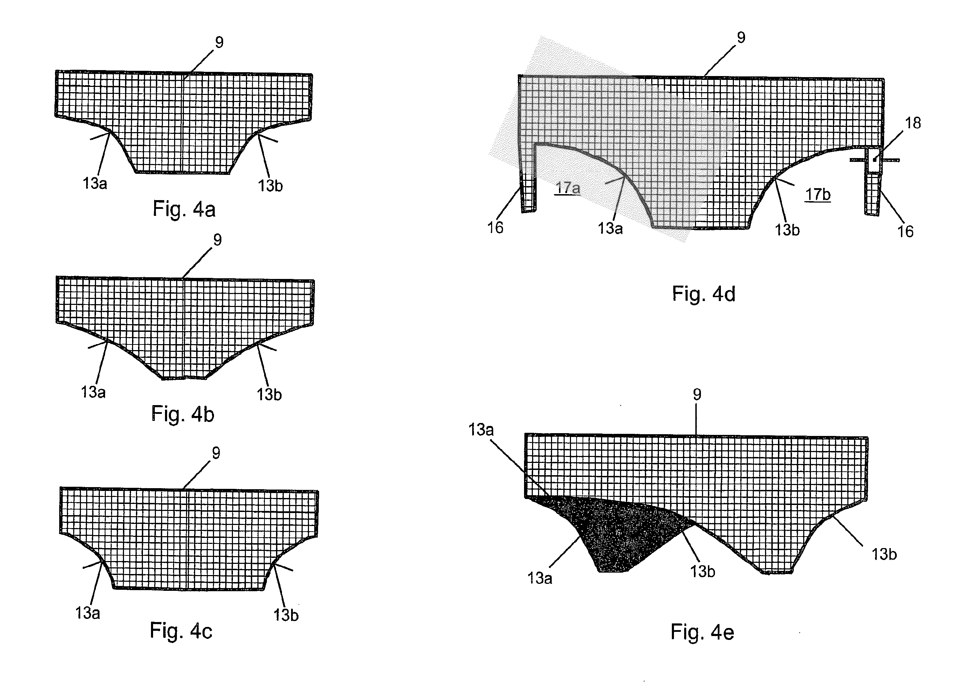

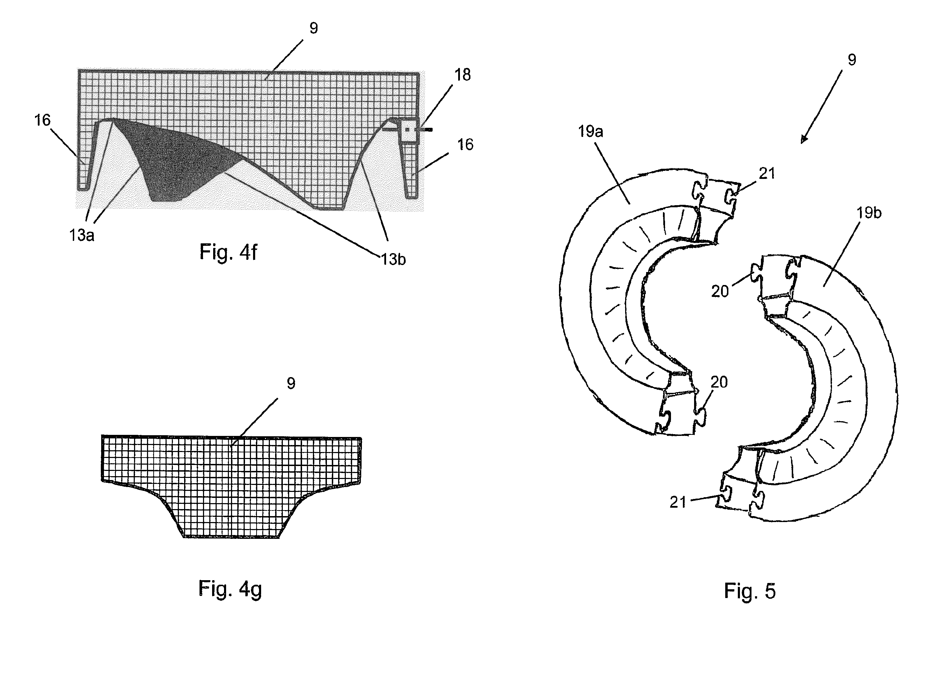

- Fig 4 e - f: verschiedene Varianten hinsichtlich der Geometrie, des Materials, der Oberflächenstruktur und des konstruktiven Aufbaus des Fettverteilerrings gemäß der Erfindung;
- Fig 5: eine schematische dreidimensionale Skizze eines Fettverteilerrings zur Illustration eines möglichen mehrteiligen Aufbaus gemäß dem Stand der Technik;

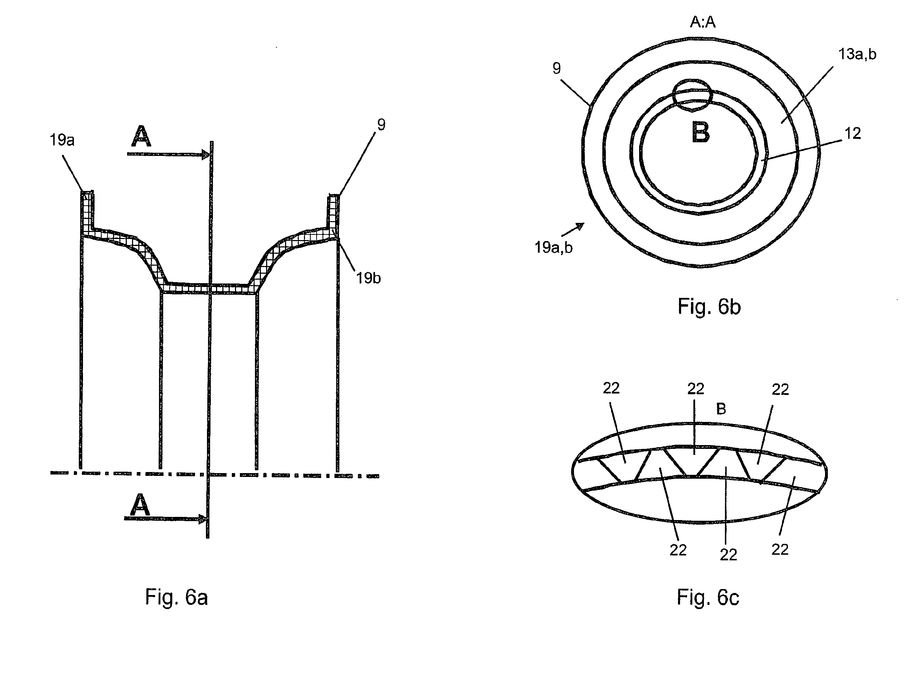

- Fig 6 a - c: schematische Darstellungen einer weiteren Möglichkeit für einen mehrteiligen Aufbau des Fettverteilerrings der vorhergehenden Figuren gemäß dem Stand der Technik.

Einander entsprechende oder gleiche Größen bzw. Teile sind mit einander entsprechenden oder gleichen Bezugszeichen versehen.

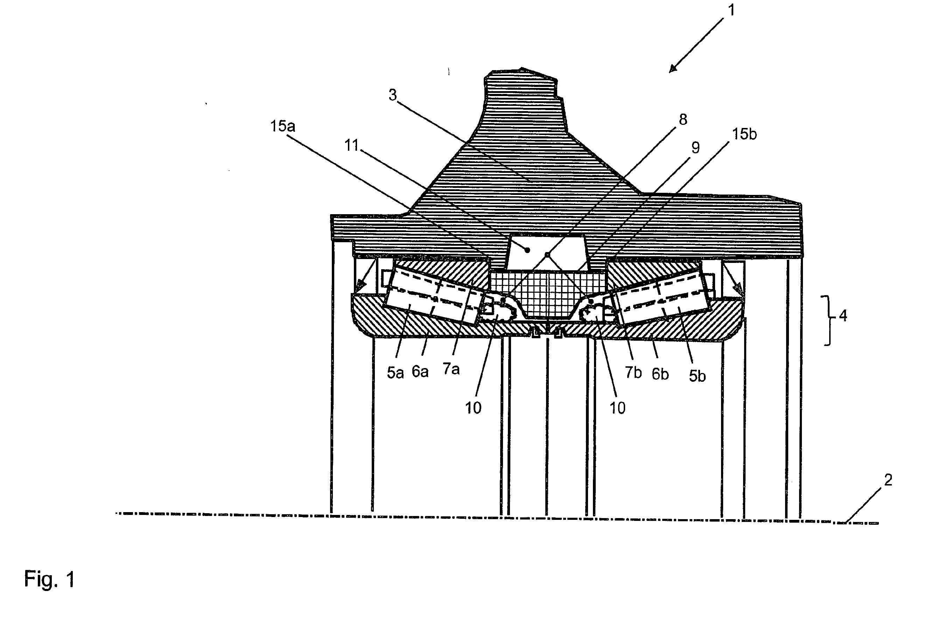

Figur 1 zeigt in einer schematischen Längsschnittdarstellung eine Radlageranordnung 1, welche die Drehung eines Rades (nicht gezeigt) um eine Drehachse 2 ermöglicht. Die Radlageranordnung 1 weist eine Nabe 3 und eine Innenringanordnung 4 auf, welche um die Drehachse 2 zueinander drehbar gelagert sind. Die Innenringanordnung 4 wird beispielsweise auf einem Achszapfen oder dergleichen (nicht gezeigt) befestigt.

Zur Umsetzung der Rotation der Nabe 3 um die Innenringanordnung 4 sind zwei Wälzkörperreihen 5 a, b mit Kegelrollen vorgesehen, welche radial innen auf zwei Innenringen 6 a, b, die einen Teil der Innenringanordnung 4 bilden, und radial außenseitig auf zwei Außenringen 7 a, b, welche in die Nabe 3 eingepresst sind, abwälzen. Die Wälzkörperreihen 5 a, b, sind zueinander beabstandet angeordnet, so dass sich zwischen diesen ein Innenraum 8 ergibt, in dem ein Fettverteilerring 9 angeordnet ist.

Der Fettverteilerring 9 ist dazu ausgebildet, die Verteilung von Schmierfett aus einem Schmierfettdepot 10, welches auf den Innenringen 6 a, b, im Bereich des Innenraums 8 angeordnet ist, zu unterstützen. Zum einen verteilt sich das Schmierfett des Schmierfettdepots 10 entlang der radialen Außenseite der Innenringe 6 a, b, so dass das Schmierfett den Wälzkörperreihen 5 a, b, zugeführt wird. Zum anderen wird Schmierfett von dem Schmierfettdepot 10 auch oftmals durch Hitzeeinwirkungen oder Vibrationen von den Innenringen 6 a, b, getrennt und würde - ohne den Fettverteilerring 9 - in einem toten Bereich 11 des Innenraums 8 abgelagert werden. Nachdem sich die Nabe 3 im Betrieb dreht, wohingegen die Innenringanordnung 4 stationär verbleibt, würde Schmierstoff, welcher in dem toten Raum 11 angelagert ist, durch die Zentrifugalkraft dort dauerhaft fixiert werden und wäre für die weitere Schmierung verloren.

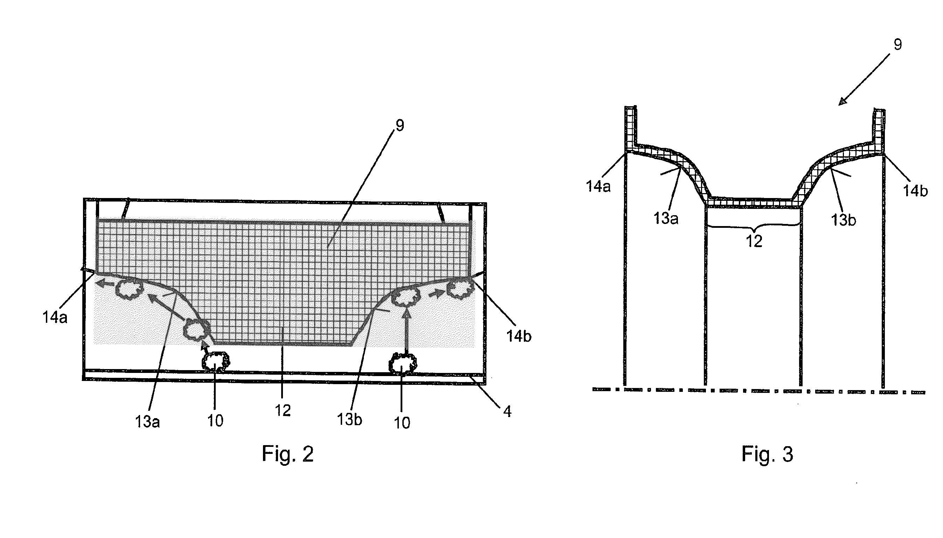

Wie sich insbesondere aus der Figur 2 ergibt, welche eine Ausschnittvergrößerung der Radlageranordnung 1 im Bereich des Fettverteilerrings 9 ist, sorgt der Fettverteilerring 9 dafür, dass Schmierfett aus dem Schmierfettdepot 10, welches radial nach außen abgeworfen wird, von dem Fettverteilerring 9 aufgefangen wird und in Richtung der Wälzkörperreihen 5 a, b weitertransportiert wird.

Der Fettverteilerring 9 in der Figur 1 bzw. 2 weist einen Mittelabschnitt 12 auf, an denen sich zwei Fettführungsflächen 13 a, b anschließen. Der Verlauf der Fettverteilungsflächen 13 a, b ist in dem gezeigten Längsschnitt ausgehend von dem Mittelabschnitt 12 zu den axialen Stirnflächen des Fettverteilerrings 9 monoton und - in diesem Beispiel - sogar streng monoton und stetig steigend ausgebildet. Durch diesen Verlauf wird das Schmierfett, welches von den Fettverteilungsflächen 13 a, b aufgefangen wird, durch die Zentrifugalkraft entlang der Fettverteilungsflächen 13 a, b in axialer Richtung geführt und - wie sich wiederum aus der Figur 1 ergibt - an die Wälzkörper der Wälzkörperreihen 5 a, b abgegeben.

Der freie Abstand zwischen Mittelabschnitt 12 und Innenringanordnung 4 ist gering, zum Beispiel in der Größenordnung von kleiner 3 mm gewählt. Der Mittelabschnitt 12 kann radial innen wie in der Figur 2 gezeigt, waagrecht ausgebildet sein, bei alternativen Ausführungsformen kann der Bereich auch konvex in Richtung der Drehachse 2 ausgewölbt realisiert sein. Der Auslauf 14 a, b der Fettverteilungsflächen 13 a, b ist in der radialen Höhe so bemessen, dass die Fettführungsflächen 13 a, b entweder in die Oberseite des angrenzenden Außenrings 7 a bzw. 7b ohne Hindernis überlaufen oder sogar radial versetzt nach innen angeordnet sind.

Wie sich wieder aus der Figur 1 ergibt, ist der Fettverteilerring 9 zwischen den Außenringen 7 a, b kraftschlüssig und/oder klemmend und/oder formschlüssig befestigt, so dass dieser mit der Nabe 3 bei einer Drehung mitgeführt wird. Die Außenringe 7 a, b sind von axial außen in die Nabe 3 eingepresst und liegen dort an Schultern 15 a, b an.

Der Fettverteilerring 9 ist bevorzugt als ein Kunststoffteil ausgebildet, welches beispielsweise in Spritzgusstechnik hergestellt wird. Es kann auch glasfaserverstärkter Kunststoff eingesetzt werden. Eine mögliche konstruktive Gestaltung des Fettverteilerrings 9 ist in der Figur 3 gezeigt, die ebenfalls einen Längsschnitt durch die Drehachse 2 darstellt. Der Fettverteilerring 9 ist in einer hohlen Ausführung realisiert. Zum einen werden bei einer derartigen Ausführungsform Materialkosten eingespart, zum anderen wird die mit der Nabe 3 mitbewegte Masse verringert. Auch in der Figur 3 ist der Fettverteilerring über einen Mittelabschnitt 12 und zwei Fettverteilungsflächen 13 a, b aufgebaut.

Ein bemerkenswerter Vorteil der Radlageranordnung 1 liegt in der Montage bzw. Demontagefreundlichkeit des Aufbaus. Bei der Montage der Radlageranordnung 1 kann in einem ersten Schritt der Fettverteilerring 9 eingelegt werden und dann in einem zweiten Schritt die Außenringe 7 a, b eingepresst werden. Bei der Demontage scheint der Fettverteilerring 9 zunächst zu stören, da er den Zugriff auf die Außenringe 7a,b zum Auspressen behindert. Nachdem der Fettverteilerring 9 jedoch aus Kunststoff aufgebaut ist und - wie nachfolgend noch erläutert wird - Sollbruchstellen aufweisen kann, kann dieser in einfacher Weise zerstörend ausgebaut werden, so dass wieder ausreichend Platz für ein Auspressen der Außenringe 7 a, b zur Verfügung steht.

Die Figuren 4a - 4g zeigen jeweils in einer schematischen Längsschnittansicht verschiedene Ausführungsformen des Fettverteilerrings 9. Obwohl die Ausführungsformen jeweils als Massivausbildungen dargestellt sind, können diese jedoch in analoger Weise zu der Figur 3 mit einem verringerten Materialaufwand als eine hohle Ausführung hergestellt werden.

Die Figur 4a zeigt eine symmetrische Ausführungsform, wobei die Fettführungsflächen 13 a, b jeweils spiegelsymmetrisch zu einer Radialebene senkrecht zu der Drehachse 2 angeordnet sind.

Die Figur 4b zeigt eine Ausführungsform mit einer flacheren Krümmung der Fettverteilungsflächen 13 a, b im Vergleich zu der Figur a, wodurch eine schwächere Förderwirkung und eine größere Fettkammer radial unterhalb des Fettverteilerrings 9 erreicht werden kann.

Die Figur 4c zeigt dagegen eine Ausführung mit einer steileren Krümmung als in der Figur 4a, wodurch eine stärkere Förderwirkung erreicht wird und zudem das Schmierfettdepot 10 noch näher an deren Wälzkörperreihen 5 a, b positioniert ist.

Die Figur 4d zeigt eine abgewandelte Ausführungsform mit Fettmengenbegrenzer, wobei an der Stirnseite des Fettverteilerrings 9 Scheiben 16 einstückig angeformt sind, welche den Raum 17 a, 16 b zwischen den Fettverteilungsflächen 13 a bzw. 13 b und den Innenringen 6 a, 6 b in axialer Richtung begrenzen. Zur Ausgabe von Schmierfett durch die Scheiben 16 ist eine Mehrzahl von Fettdurchgangslöchern 18 in Umlaufrichtung verteilt, wobei die Größe, Anzahl und Verteilung der Fettdurchgangslöcher 18 die Abgabemenge reguliert.

Die Figur 4e zeigt eine asymmetrische Ausführungsform des Fettverteilerrings 9, wobei die linke Fettverteilungsfläche 13 a in der Schnittebene eine größere axiale Ausdehnung aufweist als die rechte Fettverteilungsfläche 13 b. Aufgrund der unterschiedlichen Ausdehnungen sind auch die Krümmungen in dem gezeigten Längsschnitt unterschiedlich ausgeprägt. Mit einer derartigen Ausführungsform ist es beispielsweise möglich, auf der in Figur 4 e rechten Seite mit der größeren Krümmung eine stärkere Förderwirkung zu erreichen und auf der linken Seite eine schwächere Förderwirkung, jedoch mit einer größeren Fettkammer, zu realisieren. Es ist denkbar, diese asymmetrische Verteilung über den Umfang konstant beizubehalten. Eine Alternative ist es aber, in Umfangrichtung flache und steile Fettverteilungsflächenabschnitte alternierend zu verteilen. So zeigt sich beispielsweise in der Figur 4 e in der Schnittebene eine flache Ausführung der Fettverteilungsfläche 13 a und im Hintergrund eine steile Ausführung der Verteilungsfläche 13 a. Die Fettverteilungsfläche 13 b kann in analoger Weise alternierend ausgebildet sein.

Die Figur 4f zeigt eine Kombination aus den Ausführungsformen der Figur 4 d und 4 e, wobei der Fettverteilerring 9 sowohl alternierende Bereiche in Umlaufrichtung als auch Scheiben 16 mit Fettdurchgangslöchern 18 aufweist.

Es ist darauf hinzuweisen, dass sowohl in der Figur 4d als auch in der Figur 4 f die Fettdurchgangslöcher 18 nicht unbedingt äquidistant in Umlaufrichtung verteilt sein, oder stets die gleiche Größe aufweisen müssen. Analog zu alternierenden Ausführungsformen der Krümmung bei den Fettverteilungsflächen 13 a oder 13 b können auch über die Fettdurchgangslöcher 18 in Umlaufrichtung Bereiche mit unterschiedlicher Fettabgabecharakteristik erzeugt werden.

Die Figur 4g zeigt eine weitere Ausführungsform, wobei die Oberflächen der Fettverteilungsflächen 13 a bzw. b längs oder quer gegrillte Strukturen aufweisen, um zusätzlich für eine verzögerte oder beschleunigte Abgabe des Schmierfettes zu sorgen.

Die Figur 5 zeigt eine schematische dreidimensionale Darstellung des Fettverteilerrings 9 in einer möglichen Ausführungsform, wobei der Fettverteilerring 9 in Umlaufrichtung zweimal unterbrochen ist, so dass zwei identisch ausgebildete Hälften 19 a, b des Fettverteilerrings 9 gebildet werden. Bei der Montage können diese beiden Hälften über Haltenasen 20 und Nuten 21, welche an den freien Enden der Hälften 19 a, b angeordnet sind, in einfacher Weise zusammengefügt werden. Die Schnittstelle zwischen den beiden Hälften 19 a, b dient zugleich als Demontagehilfe oder als Sollbruchstelle, zum Beispiel im Fall der Reparatur eines Lagerschadens.

Die Figuren 6a, b, c zeigen eine zweite optionale Ausführung zur Teilung des Fettverteilerrings 9, wobei diese Ausführungsform - wie es in der Figur 6 a gezeigt ist, die der Darstellung der Figur 3 entspricht, entlang der Schnittlinie A - A geteilt wird. Die Figur 6b zeigt eine Draufsicht zur Illustration des Details B, welches in der Figur 6c schematisch dargestellt wird. Zur Verbindung der beiden Hälften 19 a, b des Fettverteilerrings 9, weist jede Hälfte 19 a bzw. b im Bereich des Mittelabschnitts 12 Nasen 22 auf, die bei der Montage ineinander greifen, so dass der Fettverteilerring 9 gebildet wird. Auch diese Schnittstelle kann bei einer Demontage als Sollbruchstelle verwendet werden.

### Bezugszeichenliste

- 1: Radlageranordnung
- 2: Drehachse
- 3: Nabe
- 4: Innenringanordnung
- 5 a, b: Wälzkörperreihen
- 6 a, b: Innenringe
- 7 a, b: Außenringe
- 8: Innenraum
- 9: Fettverteilerring
- 10: Schmierfettdepot
- 11: toter Bereich
- 12: Mittelabschnitt
- 13 a, b: Fettführungsfläche
- 14 a, b: Auslauf
- 15 a, b: Schulter
- 16: Scheibe
- 17 a, b: Raum
- 18: Fettdurchgangslöcher
- 19a: Hälfte des Fettverteilerringes
- 19b: Hälfte des Fettverteilerringes
- 20: Haltenasen
- 21: Nuten
- 22: Nasen

## Patentansprüche

1. Radlageranordnung (1) mit einem drehenden und einem stationären Drehpartner (3,4) und mit zwei Wälzkörperreihen (5a,b), wobei die Drehpartner (3,4) über die zwei Wälzkörperreihen (5a,b) zueinander um eine Drehachse (2) drehbar gelagert sind, mit einem Fettverteilerring (9), wobei der Fettverteilerring (9) drehfest mit dem drehenden Drehpartner (3) verbunden ist und eine erste Fettführungsfläche (13a) aufweist, welche so ausgerichtet ist, dass bei der Rotation des drehenden Drehpartners (3) Schmierfett an eine der Wälzkörperreihen (5a) geleitet wird, wobei der Fettverteilerring (9) eine zweite Fettführungsfläche (13b) aufweist, welche so ausgerichtet ist, dass bei der Rotation des drehenden Drehpartners (3) Schmierfett an die andere der Wälzkörperreihen (5b) geleitet wird, **dadurch gekennzeichnet, dass** die beiden Fettführungsflächen (13a,b) in dem Längsschnitt unterschiedliche Krümmungen, unterschiedliche axiale Erstreckungen und/oder unterschiedliche radiale Erstreckungen aufweisen.

2. Radlageranordnung (1) nach Anspruch 1, **dadurch gekennzeichnet, dass** ein Krümmungsverlauf der Fettführungsfläche (13a,b) in einem Längsschnitt durch die Drehachse in Umlaufrichtung variierend ausgebildet ist.

3. Radlageranordnung (1) nach Anspruch 1 oder 2, wobei die Fettführungsfläche (13a,b) Strukturen aufweist.

4. Radlageranordnung (1) nach Anspruch 3, wobei die Strukturen der Fettführungsfläche (13a,b) eine oder mehrere Spiralrillen um die Drehachse zur Steuerung der Schmierfettgeschwindigkeit sind.

5. Radlageranordnung (1) nach einem der vorhergehenden Ansprüche, wobei der Fettverteilerring (9) eine Sollbruchstelle aufweist, die eine einfache Demontage im Schadensfall ermöglicht.

6. Radlageranordnung (1) nach einem der vorhergehenden Ansprüche, wobei der Fettverteilerring (9) aus einem Kunststoffmaterial ausgebildet ist.

7. Radlageranordnung (1) nach einem der vorhergehenden Ansprüche, wobei der Fettverteilerring (9) einteilig ausgebildet ist.

8. Radlageranordnung (1) nach einem der Ansprüche 1 bis 6, wobei der Fettverteilerring (9) mehrteilig ausgebildet ist.

9. Radlageranordnung (1) nach Anspruch 8, wobei der Fettverteilerring (9) in Umlaufrichtung und/oder in axialer Richtung einfach oder mehrfach geteilt ist.

10. Radlageranordnung (1) nach einem der vorhergehenden Ansprüche, wobei die erste und/oder die zweite Fettführungsfläche (13a,b) in einem Längsschnitt durch die Drehachse (2) einen gekrümmten Kurvenlauf aufweisen.

11. Radlageranordnung (1) nach einem der vorhergehenden Ansprüche, wobei der Fettverteilerring (9) an mindestens einer Seite eine umlaufende Scheibe (16) mit Fettdurchgangslöchern (18) aufweist, welche als Fettmengenbegrenzer wirkt.

12. Radlageranordnung (1) nach einem der vorhergehenden Ansprüche, **gekennzeichnet durch** zwei drehende Außenringe (7a,b) mit Laufbahnen für die Wälzkörperreihen (5a,b), wobei der Fettverteilerring (9) zwischen den Außenringen (7a,b) kraftschlüssig gehalten ist.

13. Radlageranordnung (1) nach einem der vorhergehenden Ansprüche, **gekennzeichnet durch** zwei Innenringe (6a,b) mit Laufbahnen für die Wälzkörperreihen (5a,b), wobei die Innenringe (6a,b) unmittelbar an einer Stoßstelle aneinander stoßen und/oder über einen Klammerring miteinander verbunden sind.

14. Radlageranordnung (1) nach Anspruch 13, wobei die zwei Innenringe (6a,b) stationär sind und die Stoßstelle der zwei Innenringe (6a,b) in der radialen Richtung mit dem Fettverteilerring (9) überlappt.

## Claims

1. Wheel bearing arrangement (1) having a rotating and a stationary rotational partner (3, 4) and having two rolling body rows (5a, b), the rotational partners (3, 4) being mounted via the two rolling body rows (5a, b) such that they can be rotated with respect to one another about a rotational axis (2), having a grease distributor ring (9), the grease distributor ring (9) being connected fixedly to the rotating rotational partner (3) so as to rotate with it and having a first grease guiding face (13a) which is oriented such that, during the rotation of the rotating rotational partner (3), lubricating grease is guided onto one of the rolling body rows (5a), the grease distributor ring (9) having a second grease guiding face (13b) which is oriented such that, during the rotation of the rotating rotational partner (3), lubricating grease is guided to the other of the rolling body rows (5b), **characterized in that** the two grease guiding faces (13a, b) have different curvatures, different axial extents and/or different radial extents in longitudinal section.

2. Wheel bearing arrangement (1) according to Claim 1, **characterized in that** a curvature profile of the grease guiding face (13a, b) in a longitudinal section through the rotational axis is configured so as to vary in the circulating direction.

3. Wheel bearing arrangement (1) according to Claim 1 or 2, the grease guiding face (13a, b) having structures.

4. Wheel bearing arrangement (1) according to Claim 3, the structures of the grease guiding face (13a, b) being one or more spiral grooves around the rotational axis for controlling the lubricating grease speed.

5. Wheel bearing arrangement (1) according to one of the preceding claims, the grease distributor ring (9) having a predetermined break point which makes simple dismantling possible in the case of damage.

6. Wheel bearing arrangement (1) according to one of the preceding claims, the grease distributor ring (9) being configured from a plastic material.

7. Wheel bearing arrangement (1) according to one of the preceding claims, the grease distributor ring (9) being configured in one piece.

8. Wheel bearing arrangement (1) according to one of Claims 1 to 6, the grease distributor ring (9) being configured in multiple pieces.

9. Wheel bearing arrangement (1) according to Claim 8, the grease distributor ring (9) being split once or multiple times in the circulating direction and/or in the axial direction.

10. Wheel bearing arrangement (1) according to one of the preceding claims, the first and/or the second grease guiding face (13a, b) having a crooked curve in a longitudinal section through the rotational axis (2).

11. Wheel bearing arrangement (1) according to one of the preceding claims, the grease distributor ring (9) having, on at least one side, a circumferential disc (16) with grease passage holes (18), which circumferential disc (16) acts as a grease quantity limiting means.

12. Wheel bearing arrangement (1) according to one of the preceding claims, **characterized by** two rotating outer rings (7a, b) with raceways for the rolling body rows (5a, b), the grease distributor ring (9) being held non-positively between the outer rings (7a, b)..

13. Wheel bearing arrangement (1) according to one of the preceding claims, **characterized by** two inner rings (6a, b) with raceways for the rolling body rows (5a, b), the inner rings (6a, b) abutting one another directly at a butt joint and/or being connected to one another via a clamping ring.

14. Wheel bearing arrangement (1) according to Claim 13, the two inner rings (6a, b) being stationary and the butt joint of the two inner rings (6a, b) overlapping with the grease distributor ring (9) in the radial direction.

## Revendications

1. Arrangement de palier de roue (1) comprenant un partenaire de rotation rotatif et un partenaire de rotation fixe (3, 4), et comprenant deux rangées de corps de roulement (5a, b), les partenaires de rotation (3, 4) étant montés de manière à pouvoir tourner l'un par rapport à l'autre autour d'un axe de rotation (2) par le biais des deux rangées de corps de roulement (5a, b), comprenant une bague de distribution de graisse (9), la bague de distribution de graisse (9) étant reliée de manière solidaire en rotation au partenaire de rotation rotatif (3) et comprenant une première surface de guidage de graisse (13a), laquelle est orientée de telle sorte que, lors de la rotation du partenaire de rotation rotatif (3), de la graisse lubrifiante soit guidée sur l'une des rangées de corps de roulement (5a), la bague de distribution de graisse (9) comprenant une deuxième surface de guidage de graisse (13b), laquelle est orientée de telle sorte que, lors de la rotation du partenaire de rotation rotatif (3), de la graisse lubrifiante soit guidée sur l'autre des rangées de corps de roulement (5b), **caractérisé en ce que** les deux surfaces de guidage de graisse (13a, b) présentent, en coupe longitudinale, des courbures différentes, des étendues axiales différentes et/ou des étendues radiales différentes.

2. Arrangement de palier de roue (1) selon la revendication 1, **caractérisé en ce qu'**un profil de courbure de la surface de guidage de graisse (13a, b) en coupe longitudinale à travers l'axe de rotation est réalisé de manière variable dans la direction périphérique.

3. Arrangement de palier de roue (1) selon la revendication 1 ou 2, dans lequel la surface de guidage de graisse (13a, b) comprend des structures.

4. Arrangement de palier de roue (1) selon la revendication 3, dans lequel les structures de la surface de guidage de graisse (13a, b) sont une ou plusieurs rainures spiralées autour de l'axe de rotation pour la commande de la vitesse de la graisse lubrifiante.

5. Arrangement de palier de roue (1) selon l'une quelconque des revendications précédentes, dans lequel la bague de distribution de graisse (9) comprend une zone de rupture imposée qui rend possible un démontage simple en cas d'endommagement.

6. Arrangement de palier de roue (1) selon l'une quelconque des revendications précédentes, dans lequel la bague de distribution de graisse (9) est réalisée à partir d'un matériau plastique.

7. Arrangement de palier de roue (1) selon l'une quelconque des revendications précédentes, dans lequel la bague de distribution de graisse (9) est réalisée en une seule partie.

8. Arrangement de palier de roue (1) selon l'une quelconque des revendications 1 à 6, dans lequel la bague de distribution de graisse (9) est réalisée en plusieurs parties.

9. Arrangement de palier de roue (1) selon la revendication 8, dans lequel la bague de distribution de graisse (9) est divisée une fois ou plusieurs fois dans la direction périphérique et/ou dans la direction axiale.

10. Arrangement de palier de roue (1) selon l'une quelconque des revendications précédentes, dans lequel la première et/ou la deuxième surface de guidage de graisse (13a, b) présentent une allure de courbe courbée en coupe longitudinale à travers l'axe de rotation (2).

11. Arrangement de palier de roue (1) selon l'une quelconque des revendications précédentes, dans lequel la bague de distribution de graisse (9) comprend sur au moins un côté un disque périphérique (16) pourvu de trous traversants de graisse (18), lequel agit en tant que limiteur de quantité de graisse.

12. Arrangement de palier de roue (1) selon l'une quelconque des revendications précédentes, **caractérisé par** deux bagues extérieures rotatives (7a, b) pourvues de chemins de roulement pour les rangées de corps de roulement (5a, b), la bague de distribution de graisse (9) étant retenue par engagement par force entre les bagues extérieures (7a, b).

13. Arrangement de palier de roue (1) selon l'une quelconque des revendications précédentes, **caractérisé par** deux bagues intérieures (6a, b) pourvues de chemins de roulement pour les rangées de corps de roulement (5a, b), les bagues intérieures (6a, b) butant directement l'une contre l'autre au niveau d'une zone de butée et/ou étant reliées l'une à l'autre par le biais d'une bague de serrage.

14. Arrangement de palier de roue (1) selon la revendication 13, dans lequel les deux bagues intérieures (6a, b) sont fixes et la zone de butée des deux bagues intérieures (6a, b) chevauche la bague de distribution de graisse (9) dans la direction radiale.
